# EUROPÄISCHE PATENTANMELDUNG

(11) **EP 1 641 228 A1**
(43) Veröffentlichungstag der Anmeldung: **29.03.2006**
(21) Anmeldenummer: 04022804.1
(22) Anmeldetag: 24.09.2004
(51) Int. Cl.: H04M 3/428

(54) **Signalisieren des Endes eines Wartezustandes einer gehaltenen Telefonieverbindung**

(71) Anmelder: SIEMENS AKTIENGESELLSCHAFT, 80333 München (DE)
(72) Erfinder: Lederer, Thomas, 81379 München (DE)

(57) **Zusammenfassung**

Die Erfindung betrifft ein Verfahren zum Signalisieren des Endes eines Wartezustandes einer gehaltenen Telefonieverbindung.

Die Erfindung geht von der Überlegung aus, dass der Teilnehmer eines wartenden Endgerätes nicht weiss, wann sich sein Kommunikationspartner meldet bzw. wieder meldet und deshalb gezwungen ist, einer Musik/Einspielung ständig zuzuhören. Die Wartezeit könnte sinnvoller genutzt werden, wenn man beispielsweise seinen Telefonhörer zur Seite legen könnte, und benachrichtigt werden würde, wenn sich der Kommunikationspartner meldet. Für diesen Zweck reicht bspw. eine Meldlung auf einer Anzeigeeinheit des Telefons aber nicht aus, weil man dann ständig die Anzeigeeinheit im Auge haben müsste.

Deshalb wird bei dem erfindungsgemässen Verfahren ein Endesignal erzeugt (t20), das auch bei einem ankommenden Ruf am Endgerät (EGA1) ausgegeben wird oder das ein extra zur Signalisierung erzeugtes Tonsignal ist, das das Ende des Wartezustandes (20) signalisiert.

## Beschreibung

Die Erfindung betrifft ein Verfahren zum Signalisieren des Endes eines Wartezustandes mit den folgenden Schritten:
- für ein Endgerät einer Telefonieverbindung oder einer Videotelefonieverbindung Herstellen eines Wartezustandes, in dem trotz bestehender Verbindung kein Telefonieren möglich ist,
- Beenden des Wartezustandes für das wartende Endgerät,
- Ausgeben eines Endesignals am wartenden Endgerät beim Beenden des Wartezustandes.

Dienstmerkmale mit Wartezustand werden häufig genutzt, beispielsweise beim ISDN (Integrated Services Digital Network) bezüglich der Dienstmerkmale "Halten eines Gesprächs" oder "Umstecken eines Gerätes am Bus". Beispielsweise wird der anrufende Teilnehmer bei Hotlines oder Servicecentern häufig auf eine Parkposition gelegt und bekommt eine Wartemusik zu hören. Gleiches gilt auch, wenn der Kommunikationspartner eine Rückfrage macht und man deshalb in einen Haltezustand gelegt wird.

Damit kann der Teilnehmer des wartenden Endgerätes nicht telefonieren, obwohl eine Verbindung besteht. Die Verbindung ist beispielsweise ein durchgeschalteter Sprachkanal oder eine Verbindung auf einer höheren Protokollebene in einem Datenpaketübertragungsnetz, in dem die Sprachdaten auf unteren Protokollebenen verbindungslos übertragen werden. Das wartende Endgerät ist beispielsweise mit einem automatischen Anrufbeantwortungssystem verbunden oder es befindet sich in einem Haltezustand bzw. in einem Parkzustand. In vielen Fällen muss der Teilnehmer des wartenden Endgerätes auch im Wartezustand Gebühren für die Verbindung zahlen.

Als Endesignal für den das wartende Endgerät nutzenden Teilnehmer lässt sich beispielsweise auf einer Anzeigeeinheit eines Gerätes eine Meldung ausgeben, an der der wartende Teilnehmer erkennt, dass er wieder mit dem gerufenen Teilnehmer verbunden ist.

Es ist Aufgabe der Erfindung, ein einfaches Verfahren zum Signalisieren des Endes eines Wartezustandes anzugeben, das insbesondere die Akzeptanz und Benutzerfreundlichkeit von Diensten wie "Warten", "Parken" usw. erhöht. Außerdem soll eine zugehörige Vorrichtung angegeben werden.

Die auf das Verfahren bezogene Aufgabe wird durch die im Patentanspruch 1 genannten Verfahrensschritte gelöst. Weiterbildungen sind in den Unteransprüchen angegeben.

Die Erfindung geht von der Überlegung aus, dass der Teilnehmer des wartenden Endgerätes daran interessiert ist, möglichst schnell weiter zu telefonieren, weil er beispielsweise eine Information dringend benötigt. Dennoch soll er durch den Wartezustand nicht übermäßig beeinträchtigt werden, insbesondere wenn er noch Gebühren während des Wartezustandes zahlen muss. Der Teilnehmer des wartenden Endgerätes weiß nicht, wann sich sein Kommunikationspartner meldet bzw. wieder meldet und wäre deshalb gezwungen, einer Musik/Einspielung ständig zuzuhören. Die Wartezeit könnte sinnvoller genutzt werden, wenn man beispielsweise seinen Telefonhörer zur Seite legen könnte, und benachrichtigt werden würde, wenn sich der Kommunikationspartner meldet. Für diesen Zweck reicht bspw. eine Meldung auf einer Anzeigeeinheit des Telefons aber nicht aus, weil man dann ständig die Anzeigeeinheit im Auge haben müsste.

Deshalb wird bei dem erfindungsgemäßen Verfahren zusätzlich zu den eingangs genannten Verfahrensschritten ein Endesignal erzeugt, das auch bei einem ankommenden Ruf am Endgerät ausgegeben wird oder das ein extra zur Signalisierung erzeugtes Tonsignal ist, das das Ende des Wartezustandes signalisiert. Damit kann der Teilnehmer am wartenden Endgerät seine Aufmerksamkeit vollständig einer anderen Tätigkeit zuwenden und ist durch den Wartezustand in seinen Tätigkeiten nicht beeinträchtigt. Die Benutzerfreundlichkeit und Akzeptanz von Diensten mit Wartezustand lässt sich so auf einfache Art erhöhen.

Ein ankommender Ruf wird beispielsweise durch ein lautes Tonsignal signalisiert, das auch in einem Abstand von zwei oder drei Meter vom Endgerät noch deutlich hörbar ist. Insbesondere bei mobilen Endgeräten lässt sich ein ankommender Ruf auch durch ein Rüttelsignal signalisieren, das sich auf den Körper des Teilnehmers überträgt. Somit wird die nähere Umgebung des Teilnehmers nicht gestört.

Das Endesignal wird extra zur Signalisierung des Endes des Wartezustandes erzeugt und unterscheidet sich somit von einem Knackgeräusch beim Schalten von Verbindungen oder auch von Vorgängen, die beim Ausbleiben der Wartemusik auftreten.

Bei einer Weiterbildung des erfindungsgemäßen Verfahrens wird beim Beenden des Wartezustandes eine Endenachricht erzeugt. Das Endesignal wird abhängig von der Endenachricht ausgegeben. Endenachrichten treten in vielen standardisierten Diensten mit einem Wartezustand auf. Damit müssen die Abläufe dieser Dienste nicht verändert werden, um das erfindungsgemäße Verfahren durchzuführen. Es sind nur geringfügige Ergänzungen erforderlich.

Bei einer ersten Variante mit Endenachricht wird die Endenachricht zum wartenden Endgerät gesendet. Das wartende Endgerät erzeugt dann das Endesignal abhängig von der Endenachricht.

Bei einer alternativen Weiterbildung mit einer Endenachricht wird die Endenachricht beispielsweise an eine Anschlusseinheit des Endgerätes gesendet. Die Anschlusseinheit veranlasst dann das Ausgeben des Endesignals am Endgerät. Diese Variante ist insbesondere bei einfach aufgebauten Endgeräten geeignet, die beispielsweise gemäß einem sogenannten Stimulusprotokoll arbeiten.

Bei einer alternativen Weiterbildung des erfindungsgemäßen Verfahrens wird das Ende des Wartezustandes durch Überwachen der über die Verbindung übertragenen Daten, d.h. auf andere Art als über eine Endenachricht, automatisch erfasst. Das Endesignal wird beim Erfassen des Endes des Wartezustandes erzeugt. Bei einer Ausgestaltung wird das Ende des Wartezustandes im Endgerät bzw. am Endgerät erfasst, beispielsweise wird das Ausbleiben einer Musik oder einer Ansage automatisch erfasst. Alternativ wird das Ende des Wartezustandes in einer Anschlusseinheit des Endgerätes erfasst. Die Anschlusseinheit veranlasst dann die Ausgabe des Endesignals am Endgerät, beispielsweise an einem sogenannten Stimulusprotokoll-Endgerät, das nur mit einfachen Ausgabenachrichten angesteuert wird und das selbst nur einfache Eingabenachrichten erzeugt, beispielsweise Taste "1" gedrückt.

Bei einer nächsten Weiterbildung ist die Dauer des Endesignals länger als eine Sekunde. Zusätzlich oder alternativ wird das Endesignal an einem Lautsprecher ausgegeben. Die angegebene Dauer des Endesignals schließt bei einer Ausgestaltung auch Pausen ein, die zwischen zeitlich unmittelbar aufeinanderfolgenden einzustellendes Endesignals auftreten, beispielsweise bei einem Endesignal, das aus einer Folge von zwei, drei oder mehr als drei Tönen besteht.

Der Lautsprecher ist insbesondere ein Lautsprecher, der bestimmungsgemäß mit einem Abstand von mindestens 20 cm oder mindestens 30 cm zum Ohr zu halten ist. Bei einer Ausgestaltung ist der Lautsprecher, mit dem das Endesignal ausgegeben wird, ein Lautsprecher, der zusätzlich zu einem Ohrlautsprecher vorhanden ist, der bestimmungsgemäß am oder im Ohr gehalten wird.

Bei einer nächsten Weiterbildung des Verfahrens werden die folgenden Schritte durchgeführt:
- Aufnehmen einer Hör-Sprech-Vorrichtung des wartenden Endgerätes durch einen das wartende Endgerät nutzenden Teilnehmer vor dem Erreichen des Wartezustandes,
- Ablegen der Hör-Sprech-Vorrichtung durch den Teilnehmer während des Wartezustandes, und
- erneutes Aufnehmen der Hör-Sprech-Vorrichtung durch den Teilnehmer beim oder nach dem Ausgeben des Endesignals.
Durch diese Verfahrensschritte wird erreicht, dass der Teilnehmer eine eingespielte Wartemusik nicht mehr hört und die Hör-Sprech-Vorrichtung nicht mehr halten muss.

Bei einer anderen Weiterbildung wird der Wartezustand gemäß ITU-T-Standard (International Telecommunication Union - Telecommunication Standardization Sector) Q.733.2 oder gemäß ITU-T-Standard Q.733.4 erzeugt. Der Standard Q.733.2 betrifft den Dienst "Call Hold", d.h. den Dienst "Gespräch halten". Gemäß diesem Standard ist die Endenachricht eine CPG-Nachricht (Call Progress Message) mit einem Retrieve-Element, falls das Erzeugen des Endesignals von einer Vermittlungsstelle gesteuert wird. Dagegen ist die Endenachricht eine Notify-Nachricht mit Retrieve-Element, falls das Erzeugen des Endesignals vom Endgerät selbst gesteuert wird.

Der Standard Q.733.4 betrifft den Dienst "Terminal Portability", d.h. den Dienst "Umstecken eines Endgerätes am Bus". Die Endenachricht ist gleich der Suspense-Nachricht, falls das Erzeugen des Endesignals von einer Vermittlungsstelle gesteuert wird. Dagegen ist die Endenachricht gleich der Notify-Nachricht, falls das Erzeugen des Endesignals vom Endgerät aus gesteuert wird.

Der ITU-T-Standard Q.953.2 standardisiert für den Dienst "Call Hold" Vorgänge in den Vermittlungsstellen. Dagegen standardisiert der ITU-T-Standard Q.953.4 für den Dienst "Terminal Portability" Vorgänge in den beteiligten Vermittlungsstellen. Bei einer Ausgestaltung werden für den Dienst "Call Hold" beide genannten Standards berücksichtigt. Für den Dienst "Terminal Portability" werden bei einer anderen Ausgestaltung ebenfalls beide für diesen Dienst genannten Standards berücksichtigt.

Bei einer anderen Weiterbildung wird der Wartezustand gemäß ITU-T-Standard H.450.4 erzeugt. Der Standard H.450.4 betrifft den Dienst "Call Hold Supplementary Service for H.323". Die Standard-Gruppe um den Standard H.323 betrifft eine Übertragung von Sprachdaten, Bilddaten usw. in Datenpaketen, die einen Paketkopf mit einer Zieladresse und einen Paketrumpf mit den Nutzdaten enthalten. Beispielsweise werden die Datenpakete gemäß Internetprotokoll übertragen.

Im Fall der Berücksichtigung des Standards H.450.4 ist die Endenachricht eine Facility-Nachricht mit Retrieve Notific-Element. Alternativ ist die Endenachricht bspw. eine Facility-Nachricht mit Remote Retrieve-Element.

Bei einer anderen Alternative wird der Wartezustand gemäß einem Protokoll für Telekommunikationsanlagen erzeugt, beispielsweise gemäß einem proprietären Protokoll oder gemäß einem standardisierten Protokoll. Die Telekommunikationsanlage ist beispielsweise eine Telekommunikationsanlage der Firma Siemens AG, z.B. eine Telekommunikationsanlage vom Typ HiCOM oder vom Typ HiPath. Ein Beispiel für ein proprietäres Protokoll ist das CorNet-Protokoll der Firma Siemens AG. Aber auch Protokolle anderer Hersteller lassen sich zum Erbringen der erfindungsgemäßen Verfahrensschritte nutzen oder auf einfache Art erweitern. Ein standardisiertes Protokoll für die Signalisierung zwischen Telekommunikationsanlagen ist beispielsweise das Protokoll QSig. Auch in den genannten Protokollen für Telekommunikationsanlagen gibt es Nachrichten, die das Ende des Wartezustandes signalisieren.

Bei einer nächsten Weiterbildung des erfindungsgemäßen Verfahrens werden während des Wartezustandes Wartedaten zum wartenden Endgerät übertragen. Im Endgerät oder in einer das Endgerät steuernden Einrichtung wird das Ausbleiben der Wartedaten erfasst. Die Wartedaten betreffen beispielsweise eine Wartemusik, eine Warteansage, ein Wartevideo oder ein Wartestandbild. Alternativ können die Wartedaten aber auch Daten sein, die einen Ruhezustand betreffen, z.B. einen Zustand, in dem nur Rauschen übertragen wird oder keine Daten übertragen werden. In diesem Fall lässt sich das Einsetzen der Übertragung von Nutzdaten erfassen. Bei einer nächsten Weiterbildung wird gleichzeitig mit den Wartedaten ein Erfassungssignal übertragen. Im Endgerät oder in einer das Endgerät steuernden Einrichtung wird das Ausbleiben des Erfassungssignals erfasst.

Das Erfassungssignal ist beispielsweise ein periodisches Signal, z.B. ein Ton mit einer festen Frequenz, der nicht hörbar oder sehr leise den Wartedaten hinterlegt wird. Alternativ ist das Erfassungssignal beispielsweise ein Pulssignal. Ein Erfassungssignal erhöht die Sicherheit, mit der das Ende des Wartezustandes erkannt wird. Außerdem lässt sich das Erfassen des Endes des Wartezustandes unabhängig von den verwendeten Wartedaten durchführen, d.h. unabhängig davon, ob beispielsweise eine Wartemusik oder eine Warteansage während des Wartezustandes eingespielt wird.

Die Erfindung betrifft außerdem eine Vorrichtung zum Signalisieren des Endes eines Wartezustandes. Die Vorrichtung enthält eine Erfassungsvorrichtung zum Erfassen des Endes eines Wartezustandes und eine Steuereinheit, die an dem wartenden Endgerät die Ausgabe des Endesignals veranlasst. Die Vorrichtung befindet sich beispielsweise in einer Vermittlungsstelle, in einer Zugangseinheit eines Datenpaketübertragungsnetzes, in einer Telekommunikationsanlage oder in einem Endgerät.

Die erfindungsgemäße Vorrichtung wird insbesondere zum Durchführen des erfindungsgemäßen Verfahrens bzw. einer seiner Weiterbildungen genutzt. Damit gelten die oben genannten technischen Wirkungen auch für die erfindungsgemäße Vorrichtung.

Bei einer Weiterbildung wird die Vorrichtung als elektronische Schaltung ausgeführt, die keinen Prozessor enthält. Bei einer alternativen Weiterbildung enthält die Vorrichtung einen Prozessor, der Programmbefehle in einem Speicher abarbeitet und dabei die Funktionen der Einheiten erbringt.

Bei einer nächsten Weiterbildung ist die Vorrichtung in einem analogen Endgerät enthalten. Alternativ lässt sich die Vorrichtung als externe Zusatzeinheit für ein analoges Endgerät ausführen. Damit können auch die noch häufig anzutreffenden analogen Endgeräte in das erfindungsgemäße Verfahren auf einfache Art einbezogen werden.

Im Folgenden werden Ausführungsbeispiele der Erfindung an Hand der beiliegenden Zeichnungen erläutert. Darin zeigen:
- Figur 1: Verfahrensschritte zum Erzeugen eines Endesignals in einem Endgerät, das an einer Telekommunikationsanlage betrieben wird,
- Figur 2: Verfahrensschritte zum Erzeugen eines Endesignals an einem Endgerät, das an einer Vermittlungsstelle oder an einer Zugangseinheit betrieben wird, und
- Figur 3: Funktionseinheiten eines Endgerätes.

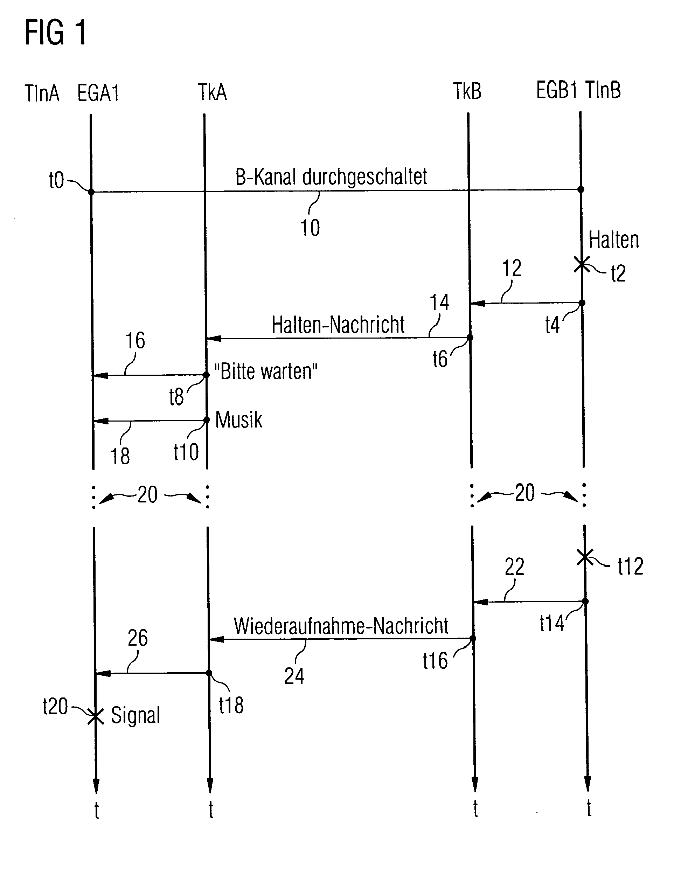

Figur 1 zeigt Verfahrensschritte zum Erzeugen eines Endesignals an einem Endgerät EGA1, das an einer Telekommunikationsanlage TkA betrieben wird. Das Endgerät EGA1 wird von einem Teilnehmer TlnA genutzt. Im Ausführungsbeispiel hat der Teilnehmer TlnA einen Teilnehmer TlnB angerufen, der ein Endgerät EGB1 nutzt, das an eine Telekommunikationsanlage TkB angeschlossen ist.

Zu einem Zeitpunkt t0 ist ein B-Kanal zwischen dem Endgerät EGA1 und dem Endgerät EGB1 durchgeschaltet, so dass die beiden Teilnehmer TlnA und TlnB miteinander sprechen können. Bei einem alternativen Ausführungsbeispiel werden die im Folgenden erläuterten Verfahrensschritte auch dann durchgeführt, wenn zwischen dem Teilnehmer TlnA und einem automatischen Anrufbeantwortungssystem oder einem automatischen Anrufannahmesystem auf der Seite des Teilnehmers T1nB ein Sprachkanal durchgeschaltet worden ist.

Zu einem Zeitpunkt t2 veranlasst der Teilnehmer T1nB durch Drücken einer Taste an seinem Endgerät, dass der Teilnehmer T1nA bzw. dessen Endgerät EGA1 in einen Haltezustand geschaltet wird. Das Drücken der Taste wird zu einem Zeitpunkt t4 vom Endgerät EGB1 mit Hilfe einer Halten-Nachricht 12 an die Telekommunikationsanlage TkB signalisiert. Die Telekommunikationsanlage TkB erzeugt daraufhin zu einem Zeitpunkt t6 eine Halten-Nachricht 14, die an die Telekommunikationsanlage TkA gesendet wird.

Als Reaktion auf die Halten-Nachricht 14 erzeugt die Telekommunikationsanlage TkA zu einem Zeitpunkt t8 eine Meldungsnachricht 16, in der der Meldungstext "Bitte warten" enthalten ist. Die Meldungsnachricht 16 bewirkt im Endgerät EGA1, dass auf einer Anzeigeeinheit, beispielsweise auf einem LCD (Liquid Cristal Display) der Meldungstext angezeigt wird.

Außerdem erzeugt die Telekommunikationsanlage TkA zu einem Zeitpunkt t10 als Reaktion auf den Empfang der Halten-Nachricht 14 eine Wartemusik, die in den zum Endgerät EGA1 durchgeschalteten Sprachkanal eingespielt wird. Damit hört der Teilnehmer TlnA während einer Wartezeit 20 eine Wartemusik. Der Teilnehmer TlnA will diese Wartemusik aber nicht hören und legt deshalb seinen Telefonhörer aus der Hand.

Jedoch legt der Teilnehmer TlnA den Hörer nicht auf, so dass die Verbindung bestehen bleibt.

Bei einem Ausführungsbeispiel bleibt das Gespräch des Teilnehmers TlnA so bspw. an einer bestimmten Position in einer Warteschlange, die der Reihe nach auf der Seite des Teilnehmers T1nB abgearbeitet wird. Insbesondere wird auf der Seite des Teilnehmers T1nB zum Verwalten der Warteschlange ein automatisches Anrufverteilsystem (ACD - Automatic Call Distribution) genutzt.

Zu einem Zeitpunkt t12 möchte der Teilnehmer TlnB das Gespräch mit dem Teilnehmer T1nA wieder aufnehmen, beispielsweise weil er nach einer Rückfrage bei einem anderen Teilnehmer eine benötigte Information erhalten hat. Die Wartezeit beträgt beispielsweise mehr als 30 Sekunden oder mehr als zwei Minuten. Zum Zeitpunkt t12 betätigt der Teilnehmer TlnB eine Taste am Endgerät EGB1, um den Haltezustand zu beenden. Zu einem Zeitpunkt t14 wird deshalb vom Endgerät EGB1 zur Telekommunikationsanlage TkB eine Wiederaufnahmenachricht 22 gesendet. Als Reaktion auf das Empfangen der Wiederaufnahmenachricht 22 erzeugt die Telekommunikationsanlage TkB zu einem Zeitpunkt t16 eine Wiederaufnahmenachricht 24, die an die Telekommunikationsanlage TkA gesendet wird.

Die Telekommunikationsanlage TkA erzeugt als Reaktion auf den Empfang der Wiederaufnahmenachricht 24 zu einem Zeitpunkt t18 eine Signalnachricht 26, die das Erzeugen eines Anruftons veranlasst. Der Anrufton wird im Endgerät EGA1 zu einem Zeitpunkt t20 erzeugt. Beim Ertönen des Anruftons nimmt der Teilnehmer T1nA seinen Hörer wieder auf und spricht mit dem Teilnehmer T1nB. Außerdem wird der Meldungstext auf der Anzeige von der Telekommunikationsanlage TkA geändert, bspw. in "Verbunden mit Nr.-TlnB", wobei Nr.-T1nB die Nummer des Teilnehmers TlnB ist.

Bei einem anderen Ausführungsbeispiel sind die Endgeräte EGA1 und EGB1 an die gleiche Telekommunikationsanlage angeschlossen. Bei einem anderen Ausführungsbeispiel werden an Stelle der Telekommunikationsanlagen TkA und TkB Zugangseinheiten eines Datenpaketübertragungsnetzes verwendet. Auch die Endgeräte EGA1 und EGB1 sind in diesem Fall Datenpaketübertragungsgeräte, die beispielsweise gemäß Voice over IP (Internet Protocol) übertragen.

Bei anderen Ausführungsbeispielen befindet sich ein Endgerät EGA1, EGB1 in einem Datenpaketübertragungsnetz, während das andere Endgerät in einem durchschaltevermittelten Telekommunikationsnetz betrieben wird.

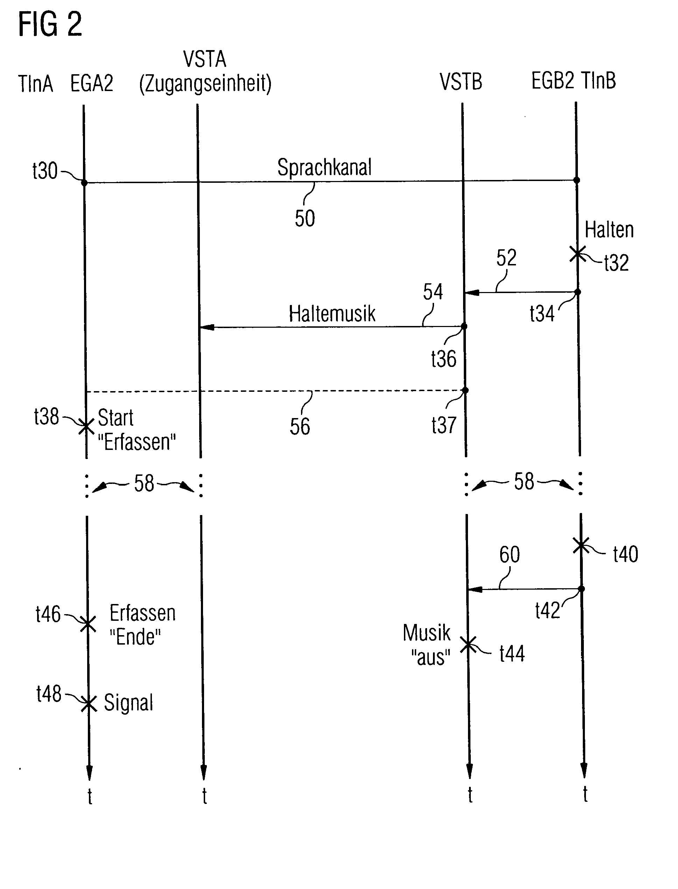

Figur 2 zeigt Verfahrensschritte zum Erzeugen eines Endesignals an einem Endgerät EGA2, das an einer Vermittlungsstelle VSTA angeschlossen ist, insbesondere an einer ISDN-Vermittlungsstelle. Ein Endgerät EGB2 eines Teilnehmers T1nB ist an einer Vermittlungsstelle VSTB angeschlossen.

Zu einem Zeitpunkt t30 ist ein Sprachkanal zwischen einem das Endgerät EGA2 nutzenden Teilnehmer TlnA und dem Teilnehmer TlnB geschaltet. Bei einem alternativen Ausführungsbeispiel werden die im Folgenden erläuterten Verfahrensschritte auch dann durchgeführt, wenn zwischen dem Teilnehmer T1nA und einem automatischen Anrufbeantwortungssystem oder einem automatischen Anrufannahmesystem auf der Seite des Teilnehmers TlnB ein Sprachkanal durchgeschaltet worden ist.

Zu einem Zeitpunkt t32 möchte der Teilnehmer TlnB das Endgerät EGA2 in eine Haltezustand schalten. Deshalb betätigt er eine entsprechende Taste an dem Endgerät EGB2. Aufgrund des Betätigens der Taste wird zu einem Zeitpunkt t34 eine Halten-Nachricht 52 erzeugt und zur Vermittlungsstelle VSTB übertragen. Die Vermittlungsstelle VSTB erzeugt als Reaktion auf den Empfang der Halten-Nachricht 52 zu einem Zeitpunkt t36 eine Haltemusik 54, die in den Sprachkanal eingespielt wird. Damit hört der Teilnehmer TlnA eine Wartemusik.

Im Endgerät EGA2 wird das Ertönen der Haltemusik erfasst. Zu einem Zeitpunkt t38 wird ein Verfahren gestartet, das das Ende der Haltemusik erfasst. Während einer Wartezeit 58 telefoniert der Teilnehmer TlnB beispielsweise mit einem anderen Teilnehmer oder der Teilnehmer TlnB beantwortet eine Frage eines anderen Teilnehmers an einer Hotline.

Zu einem Zeitpunkt t40 möchte der Teilnehmer TlnB den Wartezustand des Endgerätes EGA2 beenden. Deshalb betätigt der Teilnehmer TlnB wieder eine entsprechende Taste an seinem Endgerät EGB2. Aufgrund des Tastendrucks wird zu einem Zeitpunkt t42 vom Endgerät EGB2 eine Wiederaufnahmenachricht 60 an die Vermittlungsstelle VSTB erzeugt. Die Vermittlungsstelle VSTB veranlasst aufgrund des Empfangs der Wiederaufnahmenachricht 60, dass die Musikeinspielung zu einem Zeitpunkt t44 unterbrochen wird.

Zu einem dem Zeitpunkt t44 folgenden Zeitpunkt t46 wird die Unterbrechung der Haltemusik auch im Endgerät EGA2 automatisch erfasst. Aufgrund des Erfassens des Endes der Haltemusik wird zu einem Zeitpunkt t48 im Endgerät EGA2 automatisch das Endesignal ausgegeben. Das Endesignal ist im Ausführungsbeispiel ein Anrufton. Nach dem Ertönen des Anruftons nimmt der Teilnehmer TlnA seinen zwischenzeitlich weggelegten Hörer wieder auf und telefoniert mit dem Teilnehmer TlnB über den noch immer durchgeschalteten Sprachkanal.

Die erläuterten Ausführungsbeispiele lassen sich sowohl bei analogen Endgeräten, bei digitalen Endgeräten, bei Datenpaketübertragungsendgeräten und bei mobilen Endgeräten durchführen. Bei alternativen Ausführungsbeispielen veranlasst der rufende Teilnehmer TlnA, dass der gerufene Teilnehmer TlnB in einen Wartezustand gelegt wird. In diesen Fällen werden die an Hand der Figur 1 und 2 erläuterten Verfahrensschritte zum Erzeugen des Endesignals auf der Seite des Teilnehmers TlnB durchgeführt.

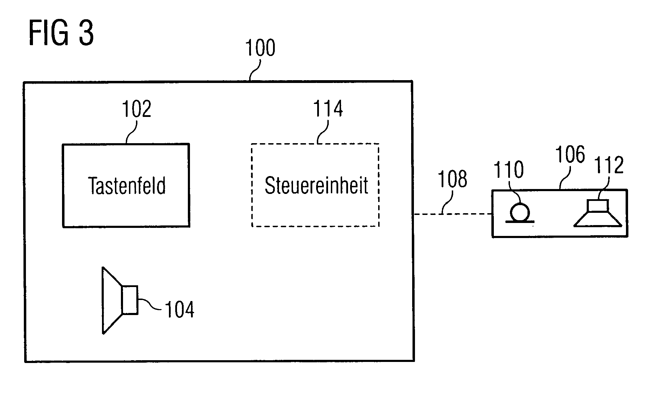

Figur 3 zeigt Funktionseinheiten eines Endgerätes 100, beispielsweise des Endgerätes EGA1 bzw. EGA2. Das Endgerät 100 enthält ein Tastenfeld 102 mit beispielsweise zwölf Ziffern- bzw. Funktionstasten. Außerdem enthält das Endgerät 100 einen Lautsprecher 104, über den ein Anrufton und auch das Endesignal ausgegeben wird.

Ein Hörer 106 ist mit dem Endgerät 100 über eine Übertragungsstrecke 108 verbunden, beispielsweise über eine Leitung bzw. eine drahtlose Übertragungsstrecke. Im Hörer 106 sind für die Sprachübertragung ein Mikrofon 110 und ein Kleinlautsprecher 112 enthalten, beispielsweise ein sogenannter Fernhörer.

Gemäß einer ersten Alternative enthält das Endgerät 100 keine Steuereinheit, sondern wird von einer Anschlusseinheit des Endgerätes 100 gesteuert. Bei einer anderen Alternative enthält das Endgerät 10 jedoch eine Steuereinheit 116, die einen Prozessor enthält.

Zusammenfassend gilt, dass ein akustisches Signal am Kommunikationsendgerät erzeugt wird, wenn der Kommunikationspartner sich meldet, nachdem der Anrufer geparkt oder gehalten wurde. Die akustische Signalisierung ist insbesondere ein Aufmerksamkeitssignal oder ein kurzes Läuten. Die Umsetzung lässt sich durch Ausnutzung der Signalisierung Hold/Unhold, Park/Unpark oder ähnlichen realisieren und ist gleichermaßen für Voice over IP als auch für traditionelle Telefonie umsetzbar, insbesondere für traditionelle ISDN-Telefonie.

Bei analogen Leitungen ohne Signalisierung lässt sich der Haltemusik eine unhörbare Tonfrequenz oder ein modelliertes Signal überlagern, um den Wartezustand bzw. dessen Ende zu signalisieren. Stellt das Endgerät fest, dass dieses Signal ausbleibt, ist das Ende des Wartezustandes erreicht und die akustische Benachrichtigung wird erzeugt.

Neben den genannten technischen Wirkungen ergeben sich auch erhebliche Kosteneinsparungen, weil der Anrufer der Hotline, die unter Umständen lange Wartezeit, sinnvoll nutzen kann und sich nicht auf das Hören der Haltemusik konzentrieren muss. An Stelle des aktiven Zuhörens wird automatisch ein akustisches Signal erzeugt. Zusätzlich lässt sich auch eine optische Signalisierung durchführen, beispielsweise das Blinken einer Lampe oder LED (Light Emitting Diode) im Sichtbereich des wartenden Teilnehmers.

Während bei den oben erläuterten Ausführungsbeispielen der wartende Teilnehmer keine Einflussmöglichkeit auf den Beginn des Verfahrens hat, wird bei alternativen Ausführungsbeispielen das Verfahren erst dann gestartet, wenn es der wartende Teilnehmer manuell aktiviert. Das bedeutet, dass der Anfang des Wartezustands nicht, wie an Hand der Figuren erläutert, automatisch erfasst wird, sondern dass der Anfang des Wartezustands explizit beim Drücken einer Taste oder die Auswahl eines Menüpunktes oder auf andere manuelle Art durch den wartenden Teilnehmer festgelegt wird. Das Erkennen des Endes des Wartezustands wird nach wie vor automatisch durchgeführt. Dies bietet den Vorteil, dass der wartende Teilnehmer von Fall zu Fall entscheiden kann, ob er bspw. einen Klingelton beim Ende des Wartezustand erhält oder nicht.

## Patentansprüche

1. Verfahren zum Signalisieren des Endes eines Wartezustandes (20, 58), mit den folgenden Schritten:
für ein Endgerät (EGA1) einer Telefonieverbindung oder einer Videotelefonieverbindung Herstellen eines Wartezustandes (20, 58), in dem trotz bestehender Verbindung kein Telefonieren möglich ist,
Beenden des Wartezustandes (20, 58) für das wartende Endgerät (EGA1),
Ausgeben eines Endesignals (t20, t48) am wartenden Endgerät (EGA1) beim Beenden des Wartezustandes (20, 58),
wobei das Endesignal (t20, t48) ein Signal ist, das auch bei einem ankommenden Ruf am Endgerät (EGA1) ausgegeben wird, oder wobei das Endesignal (t20, t48) ein extra zur Signalisierung erzeugtes Tonsignal ist, das das Ende des Wartezustandes (20, 58) signalisiert.

2. Verfahren nach Anspruch 1, **dadurch gekennzeichnet, dass** beim Beenden des Wartezustandes (t20, t48) eine Endenachricht erzeugt wird,
und dass das Endesignal (t20) abhängig von dem Empfang der Endenachricht (24) erzeugt wird.

3. Verfahren nach Anspruch 1, **dadurch gekennzeichnet, dass** das Ende des Wartezustandes (t20, t48) durch Überwachen der über die Verbindung übertragenen Daten erfasst wird,
und dass das Endesignal (t48) beim Erfassen des Endes des Wartezustandes erzeugt wird.

4. Verfahren nach einem der vorhergehenden Ansprüche, **dadurch gekennzeichnet, dass** die Dauer des Endesignals (t20, t48) länger als eine Sekunde ist,
und/oder dass das Endesignal (t20, t48) an einem Lautsprecher (104) ausgegeben wird.

5. Verfahren nach einem der vorhergehenden Ansprüche, **gekennzeichnet durch** die Schritte:
Aufnehmen einer Hör-Sprech-Vorrichtung (106) des wartenden Endgerätes (EGA1) **durch** einen das wartende Endgerät (EGA1) nutzenden Teilnehmer (TlnA) vor dem Erreichen des Wartezustandes,
Ablegen der Hör-Sprech-Vorrichtung (106) **durch** den Teilnehmer (TlnA) während des Wartezustandes (20, 58), und
erneutes Aufnehmen der Hör-Sprech-Vorrichtung (106) **durch** den Teilnehmer (TlnA) beim oder nach dem Ausgeben des Endesignals (t20, t48).

6. Verfahren nach Anspruch 2, **dadurch gekennzeichnet, dass** der Wartezustand (20, 58) gemäß ITU-T-Standard Q.733.2 oder gemäß ITU-T-Standard Q.733.4 erzeugt wird,
oder dass der Wartezustand (20, 58) gemäß ITU-T-Standard H.450.4 erzeugt wird,
oder dass der Wartezustand (20, 58) gemäß einem Protokoll für Telekommunikationsanlagen (TkA, TkB) erzeugt wird.

7. Verfahren nach Anspruch 3, **dadurch gekennzeichnet, dass** während des Wartezustandes (20, 58) Wartedaten (18, 54) zum wartenden Endgerät (EGA1) übertragen werden,
und dass das Ausbleiben der Wartedaten (54) erfasst wird (t38).

8. Verfahren nach Anspruch 7, **dadurch gekennzeichnet, dass** gleichzeitig mit den Wartedaten (54) ein Erfassungssignal (56) übertragen wird,
und dass das Ausbleiben der Wartemusik indirekt über das Ausbleiben des Erfassungssignals (56) erfasst wird.

9. Verfahren nach einem der vorhergehenden Ansprüche, **dadurch gekennzeichnet, dass** das Verfahren automatisch gestartet wird,
oder dass das Verfahren abhängig von einer Eingabe des wartenden Teilnehmers (TlnA) gestartet wird, vorzugsweise abhängig von einer nach dem Beginn des Wartezustands erzeugten Eingabe.

10. Vorrichtung (100) zum Signalisieren des Endes eines Wartezustandes (20, 58), insbesondere Vermittlungsstelle (VSTA), Zugangseinheit, Telekommunikationsanlage (TkA) oder Endgerät (EGA1),
mit einer Erfassungsvorrichtung zum Erfassen des Endes eines Wartezustandes (20, 58) eines wartenden Endgerätes (EGA1), und mit einer Steuereinheit (114), die an dem wartenden Endgerät die Ausgabe eines Endesignals (t20, t48) veranlasst,
wobei das Endesignal (t20, t48) ein Signal ist, das auch bei einem ankommenden Ruf am Endgerät (EGA1) ausgegeben wird, oder wobei das Endesignal (t20, t48) ein extra zur Signalisierung erzeugtes Tonsignal ist, das das Ende des Wartezustandes (20, 58) signalisiert.

11. Vorrichtung (100) nach Anspruch 10, **dadurch gekennzeichnet, dass** die Vorrichtung (100) mindestens eine Einheit enthält, die einen Verfahrensschritt nach einem der Ansprüche 1 bis 9 ausführt, insbesondere eine Schaltung ohne Prozessor oder eine Schaltung mit einem Prozessor.

12. Vorrichtung (100) nach Anspruch 10 oder 11, **dadurch gekennzeichnet, dass** die Vorrichtung (100) in einem an einem analogen Teilnehmeranschluss anschließbaren Endgerät enthalten ist oder dass die Vorrichtung als externe Zusatzeinheit für ein Endgerät (EGA1) ausgebildet ist, das an einem analogen Teilnehmeranschluss betreibbar ist.
